# EUROPÄISCHE PATENTSCHRIFT

(11) **EP 2 378 141 B1**
(45) Veröffentlichungstag und Bekanntmachung des Hinweises auf die Patenterteilung: **16.09.2015**
(21) Anmeldenummer: 11001354.7
(22) Anmeldetag: 18.02.2011
(51) Int. Cl.: F16C 1/26, F16C 1/10

(54) **Vorrichtung zum Steckverbinden eines Endstückes eines Bowdenzuges, insbesondere an Haubenschlössern von Kraftfahrzeugen**
Device for connecting an endpoint of a Bowden cable, in particular at bonnet locks of motor vehicles
Dispositif de connexion enfichable d'une pièce d'extrémité d'un cable de commande, notamment sur des serrures de capot de véhicules automobiles

(30) Priorität: 17.04.2010 DE 102010015309
(43) Veröffentlichungstag der Anmeldung: 19.10.2011
(73) Patentinhaber: Audi AG, 85045 Ingolstadt (DE)
(72) Erfinder: Krauter, Bernd, 85049 Ingolstadt (DE); Riedmayr, Florian, 85051 Ingolstadt (DE)

(56) Entgegenhaltungen:
- EP-A1- 1 291 536
- EP-A2- 1 026 411
- DE-A1- 19 801 343
- JP-A- 2006 118 565

## Beschreibung

Die Erfindung betrifft eine Vorrichtung zum Steckverbinden eines Endstückes eines Bowdenzuges, insbesondere an Haubenschlössern von Kraftfahrzeugen, gemäß dem Oberbegriff des Patentanspruches 1.

Eine Vorrichtung der gattungsgemäßen Art zeigt beispielsweise die US 5,596,908, bei der zur Erzielung einer einfachen, schnellen Montage das Endstück des Bowdenzuges in einen offenen Schlitz des Schlossgehäuses eingeschoben wird, bis zur Lagesicherung im Gehäuseschlitz eine radial vom Endstück abragende Rastnase in eine korrespondierende Ausnehmung im Schlossgehäuse formschlüssig einrastet. Ein ähnlicher Aufbau ist auch aus der EP 1 291 536 A1 bekannt, bei der mit Rastnasen bzw. Erhebungen versehene Zungen federnd in eine zugeordnete Ausnehmung eines Halters einrasten.

Die DE 198 01 343 A1 beschreibt ein Schnellbefestigungssystem für einen Bowdenzug, bei dem das Endstück eine Rastnut aufweist, die gegenüber dem darin aufgenommenen Befestigungsblech-Ausschnitt mit einem solchen Übermaß ausgebildet ist, dass darin eine das Befestigungsblech mit dem Endstück verspannende und festlegende Feder aufgenommen werden kann.

Die EP 1 026 411 A2 beschreibt ein Befestigungssystem für einen Bowdenzug, bei dem ein Befestigungsblech mittels eines federvorgespannten Halteringes in einer Rastnut des Endstücks verspannt wird.

Die JP 2006 118 565 A beschreibt wiederum einen Aufbau eines Befestigungssystems für einen Bowdenzug, bei dem Rastnasen federnd in eine Ausnehmung einrasten.

Aufgabe der Erfindung ist es, eine Vorrichtung zum Steckverbinden eines Bowdenzug-Endstückes vorzuschlagen, die eine noch einfachere Montage des Endstückes bei einer zuverlässigen, schwingungsresistenten Lagesicherung ermöglicht.

Diese Aufgabe wird gelöst mit den Merkmalen des Patentanspruches 1. Vorteilhafte Weiterbildungen der Erfindung sind Gegenstand der Unteransprüche.

Erfindungsgemäß wird vorgeschlagen, dass das Endstück im Bereich des Überganges der Rastnase vom Führungsschlitz zur Ausnehmung im Schlossgehäuse kippbar geführt ist, wobei die Führungsnut im Bereich des Überganges der Rastnase vom Führungsschlitz zur Ausnehmung beidseitig mit einem verbreiterten, das Kippen zulassenden Abschnitt versehen ist. Dies kann an dem bevorzugt aus Kunststoff gespritzten Endstück fertigungstechnisch besonders einfach verwirklicht werden, wobei der Montageablauf besonders bedienungssicher ist. Des Weiteren sind die verbreiterten Abschnitte der Führungsnut in der Seitenansicht gesehen jeweils zwischen einem oberen und einem unteren, nicht verbreiterten Abschnitt der Führungsnut positioniert sein. Dies stellt eine präzise und montageeinfache Einfädelung des Endstückes bei beginnender Montage und einen robusten Halt des Endstückes nach dessen Verrastung sicher.

Diese Ausgestaltung der Vorrichtung ermöglicht es, dass der Rastarm am Endstück ohne Widerstand bei der Einschubbewegung vom Bereich des offenen Schlitzes hin zur Ausnehmung im Schlossgehäuse überführbar (wegkippbar) ist. Ferner kann die Anbindung des Rastarmes an das Endstück relativ steif ausgeführt sein und damit nach dessen Einrastung im Schlossgehäuse einen besonders zuverlässigen Halt sicherstellen. Dies ist insbesondere dann der Fall, wenn gemäß einer bevorzugten Ausgestaltung vorgesehen ist, dass die Ausnehmung und die Rastnase in einer Flucht mit der Einschubrichtung des Endstückes ausgerichtet sind.

Zur weiteren Vereinfachung des Montageablaufes kann die Rastnase mit einer in Einschubrichtung des Endstückes verlaufenden, als Abweiser in Kipprichtung dienenden Abschrägung versehen sein. Die Abschrägung ist funktionell so angeordnet, dass bei in Einschubrichtung wirkender Montagekraft auf das Endstück über die Abschrägung eine Kraftkomponente in Kipprichtung ausgeübt wird, wodurch die Rastnase problemlos über den Gehäusebereich zwischen dem Schlitz und der Ausnehmung gleiten kann.

Schließlich kann in vorteilhafter Weise die Führungsnut im Endstück entgegengesetzt zur Einschubrichtung an einer angeformten Verrippung auslaufen, wobei die Verrippung bei in die Ausnehmung des Schlossgehäuses eingerasteter Rastnase formschlüssig mit einem konisch erweiterten Abschnitt des Schlitzes im Schlossgehäuse zusammenwirkt. Die Verrippung bildet somit einen zusätzlichen Falschverbauschutz bzw. eine auch in Umfangsrichtung wirkende Positionierung des Endstückes im Schlossgehäuse.

Ein Ausführungsbeispiel der Erfindung ist im folgenden anhand der beiliegenden Zeichnung näher erläutert. Es zeigen:
- Fig. 1: eine Seitenansicht eines Endstückes eines Bowdenzuges an einem Haubenschloss für Kraftfahrzeuge, das mit einer Führungsnut in einen offenen Schlitz eines Schlossgehäuses einschiebbar und mittels einer angeformten Rastnase arretierbar ist,
- Fig. 2: das Endstück nach Fig. 1 in einer Ansicht X der Fig. 1,
- Fig. 3: jeweils in einer Ansicht a, b, c das Endstück gemäß den Fig. 1 und 2 bei beginnender Montage mit in den Schlitz des Schlossgehäuses eingefädeltem Endstück,
- Fig.4: jeweils in einer Ansicht a, b, c gemäß Fig. 3 in der Montageposition mit gekipptem Endstück beim Übergang der Rastnase vom Schlitz in die darüber liegende Ausnehmung des Schlossgehäuses, und
- Fig. 5: wiederum jeweils in der Ansicht a, b, c gemäß den Fig. 3 und 4 das Endstück in der Endposition mit in die Ausnehmung im Schlossgehäuse eingerasteter Rastnase.

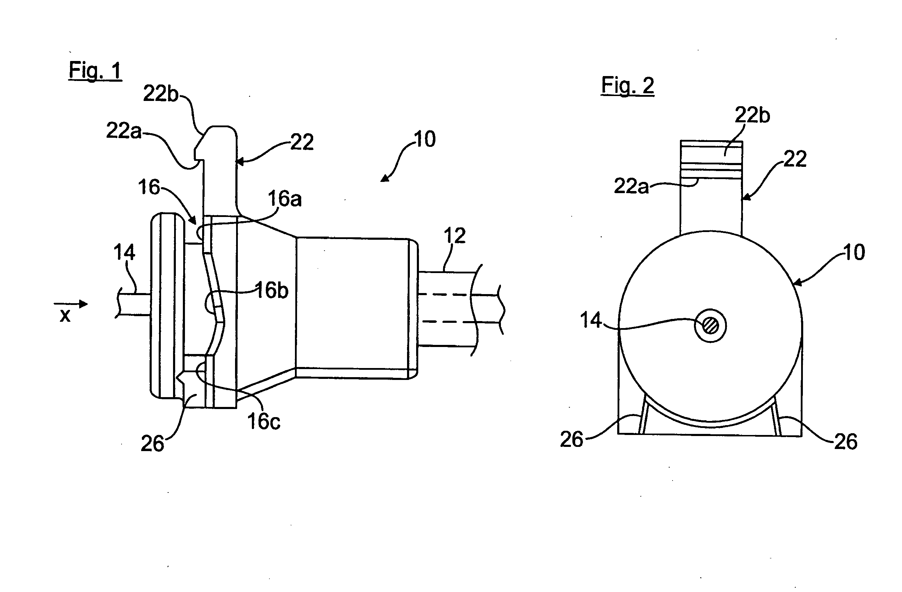

Die Fig. 1 und 2 zeigen das hier beispielhaft aus Kunststoff hergestellte Endstück 10 eines Bowdenzuges, der sich im wesentlichen aus einer Bowdenzughülle 12 und einem darin verschieblich geführten Seilzug 14 zusammensetzt und mittels dem zum Beispiel das Entriegelungselement eines nicht weiter dargestellten Haubenschlosses für Kraftfahrzeuge in an sich bekannter Weise betätigbar ist. Die Bowdenzughülle 12 ist in dem Endstück 10 befestigt, während sich der Seilzug 14 entsprechend durch das rohrförmige Endstück 10 hindurch erstreckt.

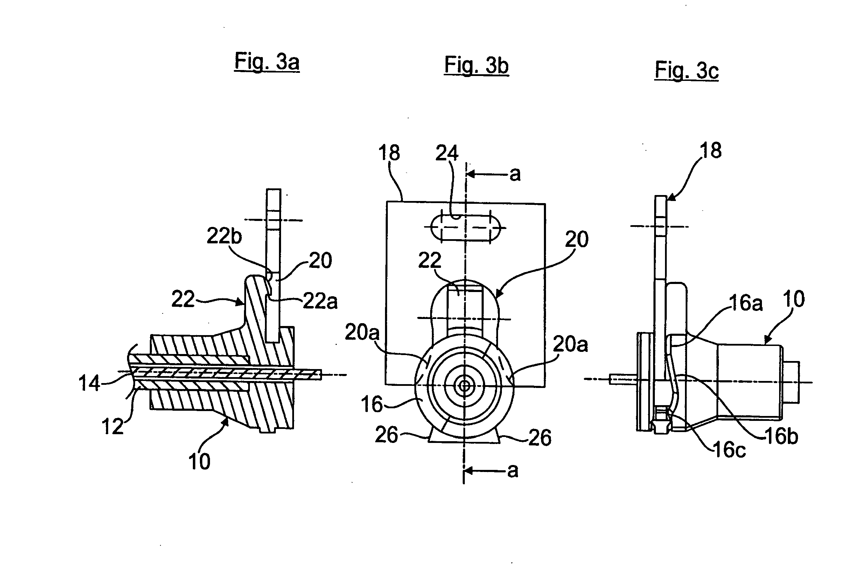

Das im wesentlichen rotationssymmetrische Endstück 10 weist eine weitgehendst umlaufende Führungsnut 16 definierter Breite auf, die auf die Blechstärke eines kastenförmigen Schlossgehäuses 18 (vergleiche Fig. 3 bis 5) abgestimmt ist und mittels der das Endstück 10 in einer Steckverbindung über einen offenen Schlitz 20 im Schlossgehäuse 18 mit dem Schlossgehäuse 18 fest verbindbar ist. Die Tiefe der Führungsnut 16 entspricht im wesentlichen der Breite des Schlitzes 20.

Ferner weist das Endstück 10 eine radial abragende Rastnase 22 auf, die in einer Flucht mit der Einschubrichtung des Endstückes innerhalb des Schlitzes 20 ausgerichtet ist. Die Rastnase 22 weist einen Hakenabschnitt 22a und eine Abschrägung 22b auf, wobei der Hakenabschnitt 22a in der Endmontagestellung des Endstückes 10 in eine Ausnehmung 24 im Schlossgehäuse 18 formschlüssig einrasten kann, während die Abschrägung 22b als Abweiser bei der noch zu beschreibenden Montage des Endstückes 10 wirkt.

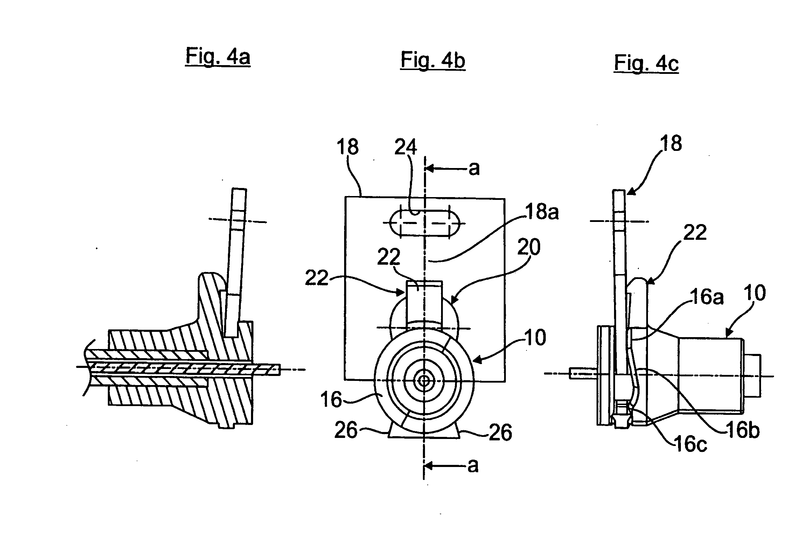

Die Führungsnut 16 ist in der Seitenansicht gesehen in drei Abschnitte 16a, 16b, 16c unterteilt, von denen der mittlere Abschnitt 16b derart durch Rücknahme einer Nutflanke verbreitert ist, dass in einer definierten Montagestellung das Endstück 10 (vergleiche Fig. 4) abkippbar innerhalb der Führungsnut 16 aufgenommen ist. Durch diese Kippbewegung schwenkt die Rastnase 22 etwa in einem der Materialstärke des Schlossgehäuses 18 entsprechendem Ausmaß von dem Schlossgehäuse 18 weg, so dass die Rastnase 22 ohne entgegen der Einschubrichtung des Endstückes 10 wirkenden Widerstand über den Bereich 18a zwischen dem Schlitz 20 und der Ausnehmung 24 schiebbar ist.

An den unteren Abschnitt 16c der Führungsnut 16 schließt sich eine an das Endstück 10 angeformte Verrippung 26 an, die in der Endmontageposition des Endstückes 10 mit einer konischen Erweiterung 20a des Schlitzes 20 formschlüssig und in Umfangsrichtung zentrierend zusammenwirkt.

Die relevanten Montagepositionen des Endstückes 10 des Bowdenzuges 12, 14 zeigen die Fig. 3 bis 5. Dabei wird zunächst in nicht dargestellter Weise der Seilzug 12 an der Schlossbetätigung eingehängt und dann das Endstück 10 in den Schlitz 20 des Schlossgehäuses 18 eingeführt, bis die Rastnase 22 in die Ausnehmung 24 einrastet.

In der Fig. 3 ist das Endstück 10 an dem offenen Schlitz 20 des Schlossgehäuses 18 eingefädelt, wobei die Abschnitte 16a der Führungsnut 16 an den den Schlitz 20 begrenzenden Schenkeln anliegen. Die Rastnase 22 mit der Abschrägung 22b befindet sich wie ersichtlich noch innerhalb des durch den Schlitz 20 eingeschlossenen Freiraumes des Schlossgehäuses 18. Ein weiteres Einschieben des Endstückes 10 würde bedingen, dass die Rastnase 22 bei entsprechendem Widerstand verformt werden müsste.

Dies wird gemäß Fig. 4 jedoch dadurch verhindert, dass aufgrund des verbreiterten Abschnittes 16b der Führungsnut 16 das Endstück 10 abkippbar ist, derart, dass die Rastnase 22 von dem Abschnitt 18a des Schlossgehäuses 18 wegschwenkt und somit ohne zusätzlichen Einschubwiderstand in Richtung der Ausnehmung 24 im Schlossgehäuse 18 bewegbar ist. Diese Kippbewegung wird durch die Abschrägung 22b der Rastnase 22 eingeleitet und unterstützt.

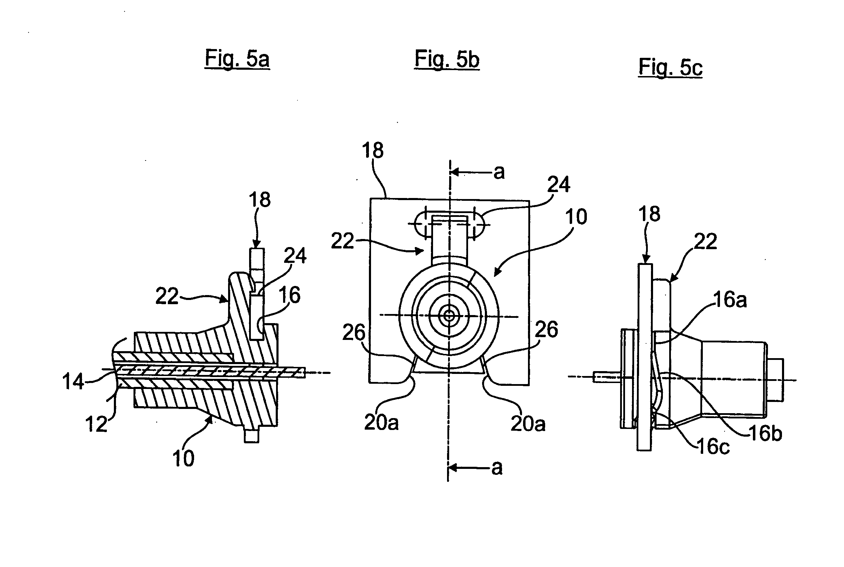

Mit weiterem Einschieben des Endstückes 10 (Fig. 5) in die Endmontagestellung gerät der untere Abschnitt des Schlitzes 20 mit der konischen Erweiterung 20a in den Bereich des unteren Abschnittes 16c der Führungsnut 16, wodurch das Endstück 10 wieder in die nicht abgekippte Position zurückgestellt wird. Zugleich rastet die Rastnase 22 mit ihrem vorspringenden Hakenabschnitt 22a in die Ausnehmung 24 des Schlossgehäuses 18 ein.

Ferner liegen die an die Führungsnut 16 anschließenden Verrippungen 26 in der Endposition des Endstückes 10 an den konischen Erweiterungen 20a des Schlitzes 20 formschlüssig an. Die Endmontageposition ist somit erreicht.

## Patentansprüche

1. Vorrichtung zum Steckverbinden eines Endstückes eines Bowdenzuges, insbesondere an Haubenschlössern von Kraftfahrzeugen, bei der das Endstück (10) eine beidseitige Führungsnut (16) aufweist, über die es in einen einseitig offenen Führungsschlitz (20) eines Schlossgehäuses (18) einschiebbar ist, wobei am Endstück (10) eine radial abragende Rastnase (22) ausgebildet ist, die im eingeschobenen Zustand des Endstückes (10) in eine außerhalb des Führungsschlitzes (20) angeordnete, korrespondierende Ausnehmung (24) des Schlossgehäuses (18) einrastet, **dadurch gekennzeichnet, dass** das Endstück (10) im Bereich des Überganges der Rastnase (22) vom Führungsschlitz (20) zur Ausnehmung (24) im Schlossgehäuse (18) kippbar geführt ist, wobei die Führungsnut (16) im Bereich des Überganges (18a) der Rastnase (22) vom Führungsschlitz (20) zur Ausnehmung (24) beidseitig mit einem verbreiterten, das Kippen zulassenden Abschnitt (16b) versehen ist und die verbreiterten Abschnitte (16b) in der Seitenansicht gesehen jeweils zwischen einem oberen und einem unteren, nicht verbreiterten Abschnitt (16a, 16c) der Führungsnut (16) positioniert sind.

2. Vorrichtung nach Anspruch 1, **dadurch gekennzeichnet, dass** die Ausnehmung (24) und die Rastnase (22) in einer Flucht mit der Einschubrichtung des Endstückes (10) ausgerichtet sind.

3. Vorrichtung nach Anspruch 1 oder 2, **dadurch gekennzeichnet, dass** die Rastnase (22) mit einer in Einschubrichtung des Endstückes (10) verlaufenden, als Abweiser in Kipprichtung dienenden Abschrägung (22b) versehen ist.

4. Vorrichtung nach einem der vorhergehenden Ansprüche, **dadurch gekennzeichnet, dass** die Führungsnut (16) im Endstück (10) entgegengesetzt zur Einschubrichtung an einer angeformten Verrippung (26) ausläuft und dass die Verrippung (26) bei in die Ausnehmung (24) des Schlossgehäuses (18) eingerasteter Rastnase (22) formschlüssig mit einem konisch erweiterten Abschnitt (20a) des Führungsschlitzes (20) im Schlossgehäuse (18) zusammenwirkt.

## Claims

1. Device for connecting an endpoint of a Bowden cable, in particular at bonnet locks of motor vehicles, where the end piece (10) has a double-sided guide groove (16) via which if can be inserted into a guide slot (20) of a lock housing (18) open on one side, where the end piece (10) has a radially projecting latching nose (22), which engages in the inserted state of the end piece (10) in a corresponding recess (24) of the lock housing (18) arranged outside the guide slot (20), **characterised in that** the end piece (10) is tiltably guided in the area of the breakout of the latching nose (22) from the guide slot (20) to the recess (24) in the lock housing (18), where the guide groove (16) is provided with a broadened section (16b) on both sides that allows tilting in the area of the breakout (18a) of the latching nose (22) from the guide slot (20) to the recess (24), and the broadened sections (16b) are positioned between an upper and a lower, non-broadened section (16a, 16c) of the guide groove (16) seen from the lateral view.

2. Device according to claim 1, **characterised in that** the recess (24) and the latching nose (22) are aligned in line with an insertion direction of the end piece (10).

3. Device according to claim 1 or 2, **characterised in that** the latching nose (22) is provided with a chamfered edge (22b) in the insertion direction of the end piece (10) and serves as a deflector in the tilting direction.

4. Device according to one of the previous claims, **characterised in that** the guide groove (16) in the end piece (10) runs out at a moulded ribbing (26) opposite to the insertion direction and that the ribbing (26) positively interacts with a conically extended section (20a) of the guide slot (20) in the lock housing (18) in case of a latching nose (22) engaged in the recess (24) of the lock housing (18).

## Revendications

1. Dispositif de connexion par enfichage d'une pièce d'extrémité d'un câble sous gaine souple, notamment pour des verrous de capots de véhicules automobiles, la pièce d'extrémité (10) comportant des deux côtés une rainure de guidage (16) par l'intermédiaire de laquelle elle peut être insérée dans une fente de guidage (20), ouverte d'un côté, d'un boîtier de verrou (18), un taquet à encoche (22) qui dépasse de façon radiale étant conçu sur la pièce d'extrémité (10), lequel taquet à encoche s'enclenche dans un évidement (24) correspondant, agencé en dehors de la fente de guidage (20), du boîtier de verrou (18) lorsque la pièce d'extrémité (10) est insérée, **caractérisé en ce que** la pièce d'extrémité (10) est guidée de manière à pouvoir basculer dans le boîtier de verrou (18) dans la zone de transition du taquet à encoche (22) qui va de la fente de guidage (20) à l'évidement (24), la rainure de guidage (16) dans la zone de la transition (18a) du taquet à encoche (22) qui va de la fente de guidage (20) à l'évidement (24) étant munie des deux côtés d'un tronçon élargi (16b) permettant le basculement et les tronçons élargis (16b) étant positionnés, dans la vue de côté, à chaque fois entre des tronçons supérieur et inférieur non élargi (16a, 16c) de la rainure de guidage (16).

2. Dispositif selon la revendication 1, **caractérisé en ce que** l'évidement (24) et le taquet à encoche (22) sont alignés avec la direction d'insertion de la pièce d'extrémité (10).

3. Dispositif selon la revendication 1 ou 2, **caractérisé, en ce que** le taquet à encoche (22) est muni d'un biseau (22b) qui s'étend dans la direction d'insertion de la pièce d'extrémité (10) et qui sert d'élément de déviation dans la direction de basculement.

4. Dispositif selon l'une des revendications précédentes, **caractérisé en ce que** la rainure de guidage (16) se termine dans la pièce d'extrémité (10), dans une direction opposée à la direction d'insertion, au niveau d'une nervure formée (26) et **en ce que**, lorsque le taquet à encoche (22) est enclenché dans l'évidement (24) du boîtier de verrou (18), la nervure (26) coopère par concordance de forme avec un tronçon élargi en cône (20a) de la fente de guidage (20) dans le boîtier de verrou (18).
